# EUROPEAN PATENT SPECIFICATION

(11) **EP 3 070 774 B1**
(45) Date of publication and mention of the grant of the patent: **30.01.2019**
(21) Application number: 16154022.4
(22) Date of filing: 03.02.2016
(51) Int. Cl.: H01M 8/04119, H01M 8/04291, H01M 8/04225, H01M 8/12, H01M 8/124

(54) **FUEL CELL SYSTEM**
BRENNSTOFFZELLENSYSTEM
SYSTÈME DE PILE À COMBUSTIBLE

(30) Priority: 20.03.2015 JP 2015057580
(43) Date of publication of application: 21.09.2016
(73) Proprietor: AISIN SEIKI KABUSHIKI KAISHA, Kariya-shi, Aichi 448-8650 (JP)
(72) Inventor: FUKUMIZU, Takao, Kariya-shi,, Aichi 448-8650 (JP); GOTO, Shunsuke, Kariya-shi,, Aichi 448-8650 (JP); SUZUKI, Gorou, Kariya-shi,, Aichi 448-8650 (JP); YAMASAKI, Shiroh, Kariya-shi,, Aichi 448-8650 (JP)
(74) Representative: TBK

(56) References cited:
- JP-A- 2010 277 973
- JP-A- 2012 038 538

## Description

### TECHNICAL FIELD

This disclosure generally relates to a fuel cell system.

### BACKGROUND DISCUSSION

As described in, for example, JP2008-98036A (which will be hereinafter referred to as Patent reference 1), a known fuel cell system includes a fuel cell generating electric power with oxidant gas and reformed gas generated from fuel and reforming water which are supplied to the fuel cell, a reforming portion generating the reformed gas from the fuel and the reforming water and supplying the reformed gas to the fuel cell, a water reservoir accommodating the reforming water, a condenser supplying the water reservoir with condensed water formed by condensation of steam included in the reformed gas flowing through the reforming portion and the fuel cell, a water supply pipe connected to a high pressure water supply source and supplying water to the water reservoir, a water supply valve provided at the water supply pipe and opening and closing the water supply pipe, and a water level sensor detecting an upper limit and a lower limit of the water level of the reforming water stored in the water reservoir. The known fuel cell system operates the water supply valve to start supplying the water in a case where the water level of the water reservoir is equal to or lower than the lower limit. The known fuel cell system stops the operation of the water supply valve and performs a steady operation to control output of the fuel cell to be in a steady state while a normal level being set between the upper limit and the lower limit of the water level of the water reservoir in a case where the water level of the water reservoir is equal to or higher than the higher limit.

However, according to such a known fuel cell system that performs the steady operation in which the normal level is set between the lower limit and the upper limit of the water level of the water reservoir, and the output of the fuel cell is controlled to be in the steady operation, the fuel cell system needs to be stopped in a case where the water level of the water reservoir decreases below the lower limit of the normal level. Water needs to be separately supplied to the water reservoir to re-start the operation of the fuel cell system, which makes maintenance complicated or cumbersome.

A need thus exists for a fuel cell which may continue power generation of a fuel cell system without a separate supply of water to a water reservoir even in a case where a water level of the water reservoir decreases below a lower limit of a normal level.

Moreover, document JP 2012 038538 A discloses a fuel cell system comprising: a condenser which generates condensed water by cooling steam-containing gas; a stored hot water channel which supplies water in a hot water storage tank to the condenser as cooling water; a stored hot water conveyance source which supplies water in the hot water storage tank to the stored hot water channel as the cooling water to cool the steam-containing gas in the condenser; a reforming water tank to which the condensed water generated by the condenser is recovered; a reforming water conveyance source which supplies the water in the reforming water tank to a reformer; and a control unit which outputs a signal to allow activation of the system if a condition that a water level in the reforming water tank is equal to or higher than a predetermined water level is met when starting up the system.

Further, document JP 2010 277973 A discloses a solid oxide fuel cell system equipped with a reformer to steam reform a raw material fuel, a solid oxide fuel cell to carry out power generation by oxidization and reduction of a reformed fuel gas and an oxidizing material, a blower to send the oxidizing material to the solid oxide fuel cell, a flow rate control valve to control a supply amount of the raw material fuel, a control means in order to control operation of the flow rate control valve and the blower, a condensation recovery means to condensate steam in the exhaust gas, a water recovery tank in order to store water condensed by the condensation recovery means, and a water sending and supplying means in order to send water in the water recovery tank to the reformer. When a water level of water in the water recovery tank is reduced to a low water level, the control means switches from operation of a normal operation mode to operation of a water recovery operation mode.

### SUMMARY

The above-mentioned object is solved by a fuel cell system according to claim 1. Further advantageous developments are subject-matters of the dependent claims.

According to an aspect of this disclosure, a fuel cell system includes a fuel cell supplied with reformed gas and oxidant gas, and generating electric power by an electrochemical reaction, a reforming portion generating the reformed gas from a fuel and reforming water, and supplying the generated reformed gas to the fuel cell, a water reservoir accommodating the reforming water and allowing the reforming water to overflow from an overflow position in a case where the reforming water exceeds a capacity of the water reservoir, a condenser supplying condensed water to the water reservoir, the condensed water being formed by condensation of steam included in the reformed gas flowing through the reforming portion and the fuel cell, a water supply pipe configured to be connected to a high pressure water supply source and supplying water to the water reservoir, a water supply valve provided at the water supply pipe, and opening and closing the water supply pipe, a pump including an inlet port and an outlet port, the inlet port being arranged at a bottom portion of the water reservoir and the outlet port being in fluid communication with the reforming portion, a low position detection sensor detecting an abnormal level, pumping up of the reforming water stored in the water reservoir to the reforming portion by the pump being difficult in a case where a water level of the reforming water stored in the water reservoir is at the abnormal level, a high position detection sensor detecting a normal level, the water level of the reforming water stored in the water reservoir exceeding a high position between the overflow position and the abnormal level at the normal level, and a control apparatus determining that the water level is in a normal range and controlling an output of the fuel cell to be in a steady state, in a case where the high position detection sensor detects the normal level, the control apparatus determining that the water level is in an output limited range and reducing the output of the fuel cell, in a case where the low position detection sensor does not detect the abnormal level and the high position detection sensor does not detect the normal level.

According to the above-described configuration, even in a case where the water level of the water reservoir decreases below the normal level, that is, even in a case where the water level is in the output limited range, the fuel cell system does not stop the operation and continues the power generation of the fuel cell with the reduced output of the fuel cell. Further, in a case where the fuel cell is generating the electric power with the reduced output, in addition to the water generated due to an electrochemical reaction at the power generation of the fuel cell, the condensed water from the condenser can be supplied to the water reservoir. Consequently, there is no need to supply the reforming water to the water reservoir separately, thereby providing an easy maintenance. In addition, even in a case where the fuel cell is generating the electric power with the reduced output, the reforming water of the water reservoir can be increased by the reforming water supplied from the condenser and by the water generated by the electrochemical reaction at the power generation of the fuel cell, in a similar manner to a case where the electric power is generated by the steady operation in which the output is not restricted. Consequently, the water level of the reforming water of the water reservoir is restored from the output limited range to the normal level without the separate supply of the water to the water reservoir.

According to another aspect of this disclosure, the control apparatus determines that the water level of the reforming water in the water reservoir is in an abnormal range and stops operation of the fuel cell system, in a case where the low position detection sensor detects the abnormal level.

According to the aspect of this disclosure, water received by the water reservoir in the normal range corresponds to water of a first predetermined amount which is needed to start the fuel cell even in a case where the fuel cell is started and stopped one time.

According to another aspect of this disclosure, water received by the water reservoir in the output limited range corresponds to water of a second predetermined amount which is needed to start the fuel cell even in a case where the fuel cell is started and stopped a plurality of times.

According to the aspect of this disclosure, from immediately after the high position detection sensor detects the normal level, the control apparatus makes the water supply valve be in an open state for a predetermined time period and supplies the water of the first predetermined amount to the water reservoir.

According to another aspect of this disclosure, the control apparatus supplies the water from the high pressure water supply source to the water reservoir by opening and closing the water supply valve intermittently, and the control apparatus supplies the water of the first predetermined amount to the water reservoir by opening and closing the water supply valve by a predetermined number of times from immediately after the high position detection sensor detects the normal level.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view of a fuel cell system of an embodiment disclosed here;
Fig. 2 is a view explaining a water level of a water reservoir shown in Fig. 1;
Fig. 3 is a flowchart of a control program performing water filling of the water reservoir, the program which is executed at a control apparatus shown in Fig. 1; and
Fig. 4 is a flowchart of a control program monitoring an abnormal water level of the water reservoir, the program which is executed at the control apparatus shown in Fig. 1.

### DETAILED DESCRIPTION

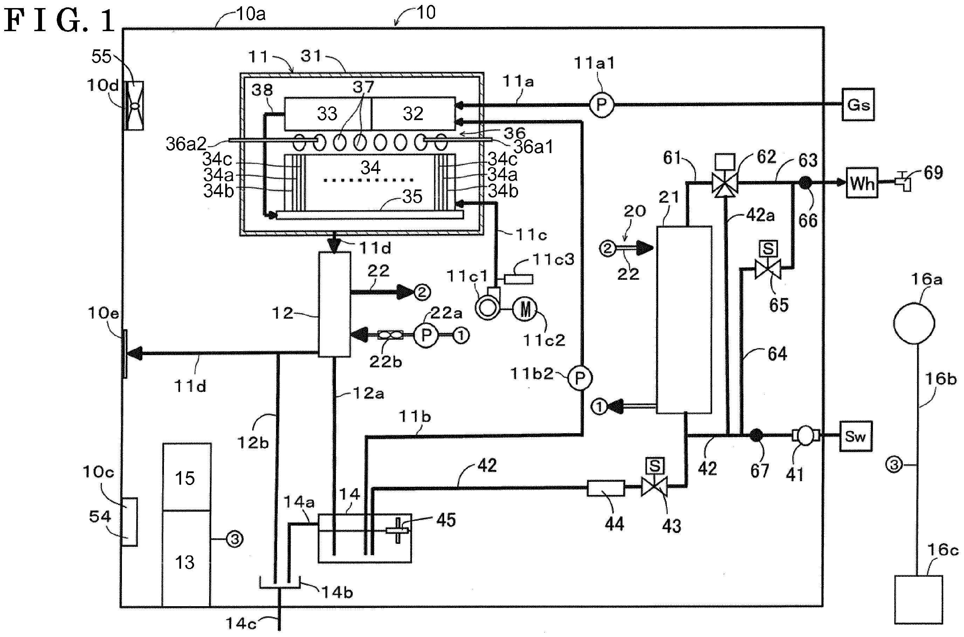

An embodiment of a fuel cell system disclosed here will be described. As illustrated in Fig. 1, the fuel cell system includes a power generation unit 10 and a hot water storage tank 21. The power generation unit 10 includes a housing 10a, and a fuel cell module 11, a heat exchanger 12 (serving as a condenser), an inverter device 13, a water reservoir 14, a control apparatus 15 and the hot water storage tank 21 which are provided inside the housing 10a.

The fuel cell module 11 is constituted to include at least a fuel cell 34 as will be described below. The fuel cell module 11 is supplied with a reforming material, reforming water and a cathode air, that is, air, serving as oxidant gas. For example, the reforming material includes a gaseous fuel for reforming such as natural gas and liquefied petroleum gas (LP gas), and a liquid fuel for reforming such as kerosene, gasoline and methanol. In the present embodiment, the explanation is made on a case where the natural gas is used. Specifically, a reforming material supply pipe 11a is connected to the fuel cell module 11. A first end of the reforming material supply pipe 11a is connected to a gas supply pipe of a supply source Gs including city gas (natural gas) so that the reforming material is supplied and a second end of the reforming material supply pipe 11a is connected to the fuel cell module 11. The reforming material supply pipe 11a is provided with a reforming material pump 11a1. Further, a reforming water supply pipe 11b is connected to the fuel cell module 11. A first end of the reforming water supply pipe 11b is connected to the water reservoir 14 so that the reforming water is supplied and a second end of the reforming water supply pipe 11b is connected to the fuel cell module 11. The reforming water supply pipe 11b is provided with a reforming water pump 11b2 (serving as a pump). Further, a cathode air supply pipe 11c is connected to the fuel cell module 11. A first end of the cathode air supply pipe 11c is connected to a cathode air blower 11c1 so that the cathode air is supplied and a second end of the cathode air supply pipe 11c is connected to the fuel cell module 11.

The heat exchanger 12 (serving as the condenser) is supplied with exhaust combustion gas (the exhaust combustion gas includes steam included in reformed gas generated at the reforming portion 33 that will be described below) discharged from the fuel cell module 11 and the heat exchanger 12 is supplied with stored hot water from the hot water storage tank 21, and accordingly, heat exchange is performed between the exhaust combustion gas and the stored hot water at the heat exchanger 12. Specifically, the hot water storage tank 21 stores therein the stored hot water, and a stored hot water circulation line 22 through which the stored hot water flows or circulates (the stored hot water circulates in directions of arrows in Fig. 1) is connected to the hot water storage tank 21. A stored hot water circulation pump 22a, a radiator 22b and the heat exchanger 12 are provided on the stored hot water circulation line 22 to be arranged in the above-described order from a lower end to an upper end of the hot water storage tank 21. An exhaust pipe 11d from the fuel cell module 11 is connected (in a penetrating manner) to the heat exchanger 12. A condensed water supply pipe 12a, which is connected to the water reservoir 14, is connected to the heat exchanger 12.

The exhaust combustion gas from the fuel cell module 11 flows through the exhaust pipe 11d and enters inside the heat exchanger 12, where the heat exchange is performed between the stored hot water and the exhaust combustion gas, and then is condensed and cooled down at the heat exchanger 12. After the condensation, the exhaust combustion gas flows through the exhaust pipe 11d and is discharged to an outside of the housing 10a from an exhaust combustion gas exhaust opening 10e as will be described below. In addition, the condensed water formed by the condensation is supplied from the heat exchanger 12 to the water reservoir 14 via the condensed water supply pipe 12a together with water generated inside the fuel cell 34 due to an electrochemical reaction that will be described below. The water reservoir 14 is configured to purify the condensed water with the use of ion-exchange resin.

According to the fuel cell system, water overflowing from the water reservoir 14 to which the condensed water generated at the heat exchanger 12 is supplied is received by a water vessel member 14b via an overflow line 14a, and then is discharged to the outside of the housing 10a from a water drain pipe 14c.

The exhaust pipe 11d is provided with a drain line 12b which branches from a downstream side of the heat exchanger 12 and is in fluid communication with the water vessel member 14b.

The heat exchanger 12, the hot water storage tank 21 and the stored hot water circulation line 22 constitute an exhaust heat recovery system 20. The exhaust heat recovery system 20 recovers exhaust heat of the fuel cell module 11 in the stored hot water and stores the exhaust heat therein.

Direct current voltage outputted from the fuel cell 34 is inputted to the inverter device 13 and is converted into a predetermined alternating current voltage at the inverter device 13. The converted predetermined alternating current voltage is outputted to a power supply line 16b. The power supply line 16b is electrically connected to a system power supply 16a which is an alternating-current power supply, and to an external electric power load 16c (for example, an electric appliance). In addition, the alternating current voltage from the system power supply 16a is inputted to the inverter device 13 via the power supply line 16b and is converted into a predetermined direct current voltage at the inverter device 13. The converted direct current voltage is outputted to auxiliary apparatuses (for example, the pumps and a blower) and/or to the control apparatus 15. The control apparatus 15 actuates the auxiliary apparatuses and controls an operation of the fuel cell system.

The fuel cell module 11 includes a casing 31, an evaporating portion 32, the reforming portion 33 and the fuel cell apparatus 34. The casing 31 is made from a heat insulating material and is formed in a box-configuration. The evaporating portion 32 is heated by combustion gas which will be described below and evaporates the supplied reforming water to generate steam (water vapor). In addition, the evaporating portion 32 preheats the reforming material that is supplied. Then, the steam generated as described above and the preheated reforming material are mixed with each other at the evaporating portion 32, and then the mixture is supplied to the reforming portion 33.

The second end of the reforming water supply pipe 11b, of which the first end (a lower end) is connected to the water reservoir 14, is connected to the evaporation portion 32. In addition, the reforming material supply pipe 11a of which the first end is connected to the supply source Gs is connected to the evaporation portion 32.

The reforming portion 33 is heated by the combustion gas which will be described below, and thus is supplied with heat needed for a steam reforming reaction. Then, from the mixed gas (the reforming material, the steam) supplied from the evaporating portion 32, the reforming portion 33 generates the reformed gas (anode gas) including the steam. The generated reformed gas is sent out from a reformed gas delivery pipe 38.

The fuel cell 34 is constituted by a fuel electrode, an air electrode (an oxidant gas electrode) and plural cells 34a stacked one another. The plural cells 34a are formed by electrolytes arranged between the fuel electrode and the air electrode. The fuel cell of the present embodiment is a solid oxide fuel cell, and zirconium oxide, which is a type of solid oxide, is used as the electrolyte. As a fuel, for example, hydrogen, carbon monoxide or methane gas is supplied to the fuel electrode of the fuel cell 34. An operation temperature of the fuel cell 34 of the present embodiment is approximately 400 °C to 1000 °C. Even at the operation temperature that is equal to or lower than 400 °C, a power generation amount that is equal to or less than a rated power can be generated. In addition, the power generation is permitted to start at 600 °C. Not only the hydrogen but also natural gasses and/or coal gas may be used as a direct fuel. In this case, the reforming portion 33 may be omitted.

A fuel flow passage 34b, through which the reformed gas serving as the fuel flows, is provided at a fuel electrode-side of the cell 34a. An air flow passage 34c, through which the air (the cathode air) serving as the oxidant gas flows, is provided at an air electrode-side of the cell 34a.

The fuel cell 34 is arranged on a manifold 35. The reformed gas is supplied from the reforming portion 33 to the manifold 35 via the reformed gas delivery pipe 38. A lower end (a first end) of the fuel flow passage 34b is connected to a fuel outlet port of the manifold 35. The reformed gas sent out from the fuel outlet port is introduced from the lower end of the fuel flow passage 34b, and then comes out from an upper end thereof. The cathode air sent out by the cathode air blower 11c1 is supplied via the cathode air supply pipe 11c, and comes in from a lower end of the air flow passage 34c and then comes out from an upper end thereof.

The cathode air blower 11c1 is actuated by an electric motor 11c2. A drive duty of the electric motor 11c2 is calculated at the control apparatus 15. A flow sensor 11c3 provided at a downstream side of the cathode air blower 11c1 of the cathode air supply pipe 11c detects a flow amount of the cathode air discharged by the cathode air blower 11c1. The flow sensor 11c3 is configured to send the detection result to the control apparatus 15.

At the fuel cell 34, the power generation is performed with the reformed gas serving as the fuel which is supplied to the fuel electrode and the cathode air serving as the oxidant gas which is supplied to the air electrode. That is, the electrochemical reactions presented by a chemical formula 1 and a chemical formula 2, which are stated below, occur at the fuel electrode. The electrochemical reaction presented by a chemical formula 3, which is stated below, occurs at the air electrode. That is, oxide ion (O²⁻) generated at the air electrode passes through the electrolyte and reacts with the hydrogen at the fuel electrode, and thereby generating electric energy. Accordingly, the reformed gas (anode off-gas) and the oxidant gas (air, a cathode off-air), which were not used for the power generation, are sent out from the fuel flow passage 34b and the air flow passage 34c. The H₂O (water) generated inside the fuel cell 34 by the electrochemical reaction presented by the chemical formula 1 is sent out to the water reservoir 14 via a water purifier that can remove an ionic component.

(Chemical formula 1) H₂ + O²⁻ → H₂O + 2e⁻

(Chemical formula 2) CO + O²⁻ → CO₂ + 2e⁻

(Chemical formula 3) 1/2O₂ + 2e⁻ → O²⁻

A combusting portion 36 is provided between the fuel cell 34, and the evaporating portion 32 and the reforming portion 33. At the combusting portion 36, the anode off-gas (fuel off-gas) from the fuel cell 34 is burnt or combusted by the cathode off-air (oxidant off-gas) from the fuel cell 34, and the evaporating portion 32 and the reforming portion 33 are heated by the combustion gas (flame 37). Further, the inside of the fuel cell module 11 is heated to an operation temperature.

The combusting portion 36 is provided with a pair of ignition heaters 36a1 and 36a2 for igniting the anode off-gas. The exhaust combustion gas generated at the combusting portion 36 flows from the fuel cell module 11 through the exhaust pipe 11d and reaches the heat exchanger 12 together with the water generated inside the fuel cell 34 due to the electrochemical reactions.

When the fuel cell system is started, the control apparatus 15 executes a warming up mode before a power generation mode. In the warming up mode, the control apparatus 15 actuates the reforming material pump 11a1 to supply the reforming material to the combusting portion 36 via the reforming material supply pipe 11a and via the evaporating portion 32, the reforming portion 33 and the fuel cell 34 of the fuel cell module 11. The control apparatus 15 also actuates the cathode air blower 11c1 to supply the air (the cathode air) serving as the oxidant gas to the combusting portion 36 via the air flow passage 34c and via the air electrode of the cell 34a of the fuel cell module 11. When the ignition heaters 36a1 and 36a2 are ignited, the reforming material is combusted by the air at the combusting portion 36. The reforming portion 33, the evaporating portion 32 and the fuel cell 34 are heated by a combustion heat of the combusting portion 36. Further, when the reforming portion 33 and the evaporating portion 32 are heated to be equal to or higher than a predetermined temperature, the control apparatus 15 actuates the reforming water pump 11b2 and starts the reforming reaction at the reforming portion 33, and accordingly the reformed gas and the cathode air are combusted at the combusting portion 36 to heat the fuel cell 34. When the reforming portion 33, the evaporating portion 32 and the fuel cell 34 are heated to be in a predetermined temperature range, the control apparatus 15 ends the warming up mode and moves to the power generation mode.

As the control apparatus 15 actuates the reforming water pump 11b2, the reforming water inside the water reservoir 14 is supplied to the evaporating portion 32 via the reforming water supply pipe 11b. The reforming water is heated at the evaporating portion 32 to become the steam or water vapor. The steam moves to the reforming portion 33 together with the reforming material supplied from the reforming material supply pipe 11a. The reforming material is reformed with the steam and forms the anode gas (hydrogen containing gas), that is, the reformed gas including the steam (an endoergic reaction). The anode gas is supplied to the fuel electrode of the cell 34a of the fuel cell 34 via the fuel flow passage 34b. Further, the cathode air blower 11c1 is actuated and the cathode air (the air) is supplied to the air electrode of the cell 34a via the air flow passage 34c. Accordingly, the fuel cell 34 generates the electric power.

In the warming up mode and the power generation mode, the high temperature exhaust combustion gas generated at the fuel cell module 11 is discharged to the heat exchanger 12 having a condensing function via the exhaust pipe 11d together with the water generated inside the fuel cell 34 due to the electrochemical reaction. The steam contained or included in the high temperature exhaust combustion gas is cooled down at the heat exchanger 12, and is accordingly condensed to become the condensed water. Together with the water generated inside the fuel cell 34 due to the electrochemical reaction, the condensed water is supplied to the water reservoir 14 via the condensed water supply pipe 12a.

The housing 10a is provided with an intake port 10c for taking an outside air in, a ventilation exhaust port 10d for discharging the air inside the housing 10a to the outside of the housing 10a and the exhaust combustion gas exhaust opening 10e for discharging the exhaust combustion gas from the heat exchanger 12 to the outside of the housing 10a. The intake port 10c is provided with a check valve 54. The check valve 54 allows the air to flow from the outside to the inside of the housing 10a and restricts the air from flowing in the opposite direction, that is, from the inside to the outside of the housing 10a.

The ventilation exhaust port 10d is provided with a ventilation fan 55. The ventilation fan 55 sends out the air (ventilation, exhaustion) inside the housing 10a to the outside.

As illustrated in Fig. 1, the hot water storage tank 21 is accommodated within the housing 10a. Tap water is supplied to the hot water storage tank 21 from a water supply pipe 42 connected to a high pressure water supply source Sw, such as for example a water pipe, via a pressure reducing valve 41. A temperature of the tap water is measured with a water temperature measuring device 67, including a thermistor, provided at the water supply pipe 42, and the measured temperature is outputted to the control apparatus 15. The hot water storage tank 21 stores the hot water which is warmed and generated due to the exhaust heat recovery by the stored hot water circulation line 22, and the hot water is adjusted at 70 °C, for example.

The hot water in the hot water storage tank 21 flows from a hot water supply pipe 61 into a mixing valve 62. The mixing valve 62 is connected to the water supply pipe 42 via a water feed pipe 42a. The mixing valve 62 is connected to the water supply pipe 42 via the water feed pipe 42a. The mixing valve 62 adjusts a hot water/water mixture ratio of the hot water inflowing from the hot water storage tank 21 via the hot water supply pipe 61 and the water inflowing from the high pressure water supply source Sw via the water supply pipe 42 and the water feed pipe 42a, thereby to generate mixed hot water. A temperature of the mixed hot water is adjusted to a preset temperature, for example, 30°C, which is lower than a temperature of the hot water in the hot water storage tank 21. The mixed hot water is connected to a supply side of a hot water supplier Wh via a mixed hot water supply pipe 63. The hot water supplier Wh directly supplies the mixed hot water, which is sent from the mixed hot water supply pipe 63, from a hot water tap 69, or the hot water Wh heats the mixed hot water and then supplies the heated hot water from the hot water tap 69.

As illustrated in Fig. 1, a bypass path 64 connects the water supply pipe 42 to the mixed hot water supply pipe 63. The bypass path 64 is provided with a solenoid on-off valve 65 that is a normally open type valve, that is, the solenoid on-off valve 65 is in an open state when not being electrified. For example, in a case where the control on the hot water and the water is lost, and thus the temperature of the mixed hot water of the mixed hot water supply pipe 63 increases and exceeds a preset mixed hot water upper limit temperature, for example, 50 °C because of a failure of the mixing valve 62 or of a control system of the mixing valve, the mixed hot water supply pipe 63 is switched to open by the control apparatus 15. By opening the mixing valve 62, the water is introduced from the water supply pipe 42 to the mixed hot water supply pipe 63, and accordingly the temperature of the mixed hot water at the mixed hot water supply pipe 63 is reduced, thereby preventing an abnormally hot water from being discharged. The temperature of the mixed hot water is measured with a hot water temperature measuring device 66, including a thermistor, provided at the mixed hot water supply pipe 63 at a downstream side relative to a merging portion at which the mixed hot water supply pipe 63 and the bypass path 64 join to each other, and the measured temperature is outputted to the control apparatus 15.

As illustrated in Fig. 1, the water supply pipe 42 branches from a connection portion with the hot water storage tank 21 and is connected to the water reservoir 14 via a water supply valve 43 and a water purifier 44. The water purifier 44 includes therein ion-exchange resin that can remove an ionic component included in the tap water. The tap water, of which the ionic component has been removed, is supplied from the water supply pipe 42 to the water reservoir 14. The water reservoir 14 is provided with a water level measuring device 45 detecting a water level of the reforming water of the water reservoir 14.

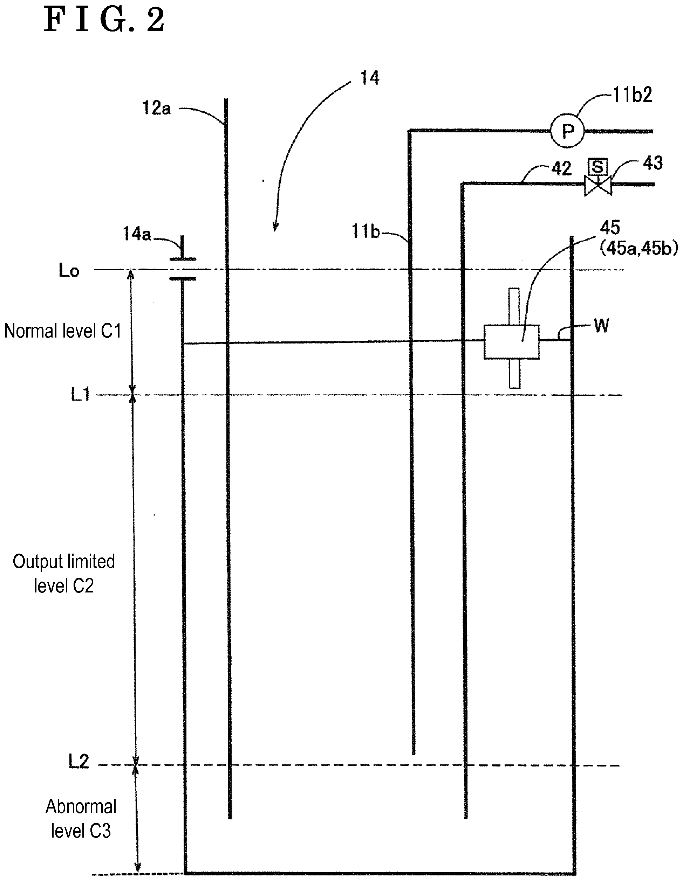

The water level measuring device 45 is a float-type water level indicator, for example. As illustrated in Fig. 2, the water level measuring device 45 includes a low position detection sensor 45a detecting an abnormal level C3 and a high position detection sensor 45b detecting a normal level C1. At the abnormal level C3, a water level W of the reforming water stored in the water reservoir 14 is equal to or lower than a low position L2 at which it is difficult for the reforming water pump 11b2 to pump up the reforming water to the reforming portion 33. At the normal level C1, the water level W of the reforming water stored in the water reservoir 14 is equal to or higher than a predetermined high position L1 which is between an overflow position Lo and the abnormal level C3. The overflow position Lo corresponds to a position at which a pipe of the overflow line 14a is provided to the water reservoir 14.

The low position detection sensor 45a detects whether or not the water level W of the reforming water of the water reservoir 14 is equal to or lower than the predetermined low position L2 that is lower than the high position L1. In other words, the low position detection sensor 45a detects whether or not the water level W of the reforming water of the water reservoir 14 is at the abnormal level C3 at which it is difficult for the reforming water pump 11b2 to pump the reforming water to the reforming portion 33. For example, in a case where the water level W of the reforming water lowers and reaches the low position L2, an OFF signal of the low position detection sensor 45a changes to an ON signal of the low position detection sensor 45a and the ON signal is outputted to the control apparatus 15. As described above, in a case where the water level W of the reforming water is equal to or less than the low position L2, the low position detection sensor 45a outputs the ON signal. Accordingly, it is detected that the water level W of the reforming water is at the abnormal level C3 and it is determined that the water level W of the reforming water is in an abnormal range C3.

The high position detection sensor 45b detects whether or not the water level W of the reforming water of the water reservoir 14 is at the normal level C1 that is equal to or higher than the high position L1. For example, in a case where the water level W of the reforming water rises and reaches the high position L1, an OFF signal of the high position detection sensor 45b changes to an ON signal of the high position detection sensor 45b and the ON signal is outputted to the control apparatus 15. As described above, in a case where the water level W of the reforming water is equal to or higher than the high position L1, the high position detection sensor 45b outputs the ON signal. Accordingly, it is detected that the water level W of the reforming water is at the normal level C1 and it is determined by the control apparatus 15 that the water level W of the reforming water is in a normal range C1.

In a case where the low position detection sensor 45a does not detect the abnormal range C3 and the high position detection sensor 45b does not detect the normal level C1, that is, in a case where the low position detection sensor 45a and the high position detection sensor 45b output the OFF signals, it is determined that the water level W of the reforming water is in an output limited range C2.

Next, in a case where the fuel cell system is newly installed or the fuel cell system that has been used is moved and is installed at a new location, the water reservoir 14 is empty and does not store therein the reforming water because the fuel cell system has been stopped. To start the operation of the fuel cell system, the tap water needs to be supplied to the empty water reservoir 14. That is, water filling of the water reservoir 14 needs to be performed so that the water level W of the reforming water of the water reservoir 14 exceeds the low position L2 and then exceeds the high position L1 to reach the normal level C1.

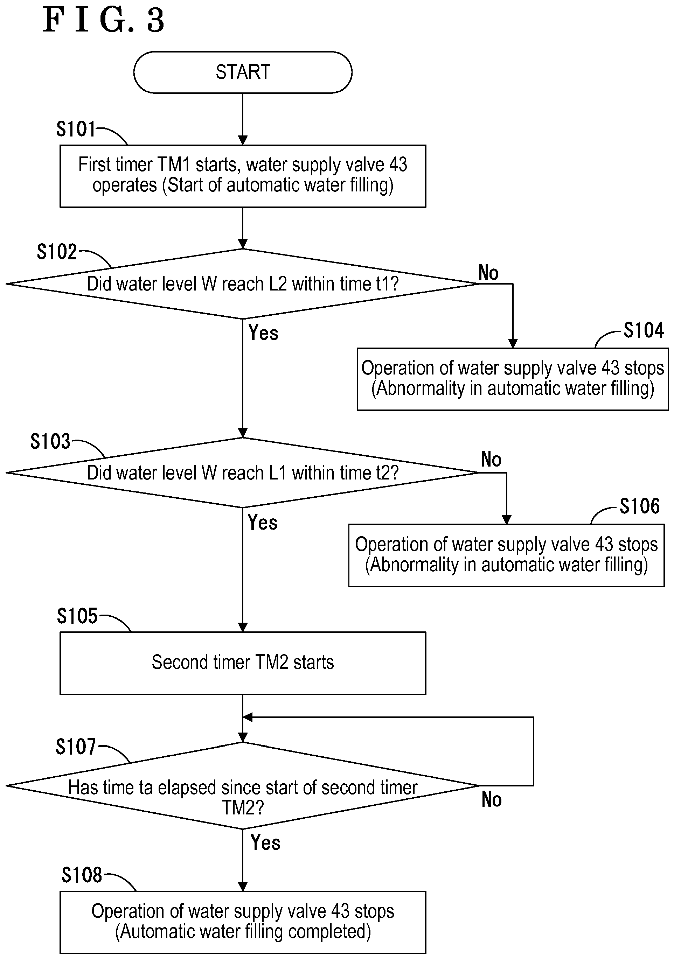

With regard to an automatic water filling of the water reservoir 14 by which the water reservoir 14 is automatically filled with the water, the control apparatus 15 starts the execution of a program corresponding to the flowchart shown in Fig. 3 when a start-up switch is turned on (or when the start-up is automatically initiated at a start time preset by a user).

At Step S101, a first timer TM1 is started and the water supply valve 43 is operated. Accordingly, the tap water is supplied to the water reservoir 14 and thus the water level W of the water reservoir 14 starts rising. Next, in a case where the water level W reaches the low position L2 within a time t1 that is set in advance, the control apparatus 15 determines as "Yes" at Step S102 and moves the program to Step S103. On the other hand, in a case where the water level W does not reach the low position L2 within the time t1 from the start of the time TM1, the control apparatus 15 determines as "No" at Step S102 and stops the operation of the water supply valve 43 at the time t1 from the start of the timer TM1 (Step S104). Thus, it is determined that there occurs an abnormality in the automatic water filling, and accordingly wasteful supply of the tap water to the water reservoir 14 is restricted.

Next, in a case where the water level W reaches the high position L1 within a time t2 from the start of the timer TM1 (the time t2 is set in advance to be longer than the time t1), the control apparatus 15 determines as "Yes" at Step 103, moves the program to Step S105 and starts a second timer TM2. On the other hand, in a case where the water level W does not reach the high position L1 within the time t2 from the start of the time TM1, the control apparatus 15 determines as "No" at Step S103 and stops the operation of the water supply valve 43 at the time t2 from the start of the timer TM1 (Step S106). Thus, it is determined that there occurs the abnormality in the automatic water filling, and accordingly the wasteful supply of the tap water to the water reservoir 14 is restricted.

Next, in a case where a predetermined time period ta, which is set in advance, has not elapsed since the start of the second timer TM2, the control apparatus 15 determines as "No" at Step S107 and repeats the processing of Step S107. In a case where the time period ta has elapsed since the start of the second timer TM2, the control apparatus 15 determines as "Yes" at Step S107 and moves the program to Step S108. At step S108, the operation of the water supply valve 43 is stopped at the time period ta from the start of the second timer TM2, and accordingly the automatic water filling is completed.

While the water supply valve 43 is operating, in starting the water supply from the water supply pipe 42 to the water reservoir 14, the control apparatus 15 controls the water supply valve 43 from the start to the stop of the water supply so that the water supply valve 43 opens and closes intermittently. An open time of the water supply valve 43 and a close time of the water supply valve 43 during the operation of the water supply valve 43 are set such that the tap water is supplied to the water reservoir 14 smoothly without exceeding a processing capacity of the ion-exchange resin provided within the water purifier 44.

For the water level W of the reforming water of the water reservoir 14, the three ranges are set on the basis of the low position L2 and the high position L1. The water level W is set to be in the normal range C1 in a case where the water level W is higher than the high position L1, the water level W is set to be in the output limited range C2 in a case where the water level W is between the high position L1 and the low position L2, and the water level W is set to be in the abnormal level C3 in a case where the water level W is lower than the low position L2.

An amount of the water supplied to or poured into the water reservoir 14 by making the water supply valve 43 be in an open state for the predetermined time period ta from immediately after the high position detection sensor 45b detects the normal level C1 corresponds to a first predetermined amount V1 that is needed to start the fuel cell 34 even in a case where one time of start-up and stop of the fuel cell 34 is performed. In other words, the first predetermined amount V1 corresponds to the amount of water needed to re-start the fuel cell 34 even after the fuel cell 34 is started and stopped one time. The first predetermined amount V1 is 750 cc, for example. The one time of start-up of the fuel cell 34 refers to performing the warming up from a room temperature state and making the fuel cell 34 reach a steady operation in which a rated power of the fuel cell 34 is obtained. In a case where the supply of the reforming material is unstable due to a failure or an abnormality of the fuel cell system, for example, in a case where the reforming material pump 11a1 has a failure, the fuel cell system needs to be stopped for a check, and repair or replacement of the reforming material pump 11a1. The one time of stop of the fuel cell 34 refers to making the fuel cell 34 that is in a steady operation state and thus is in a high temperature state reach a stopped state in which the fuel cell 34 stops the power generation and all the equipment and apparatuses are stopped.

The water received by the water reservoir 14 in the output limited range C2 corresponds to water of a second predetermined amount V2 which is needed to start the fuel cell 34 even in a case where plural times of start-ups and stops of the fuel cell 34 are performed, for example, the fuel cell 34 is stopped twice. In other words, the second predetermined amount V2 corresponds to the amount of water needed to re-start the fuel cell 34 even after the fuel cell 34 is started and stopped by plural times. The second predetermined amount V2 is 1050 cc, for example.

A gravitational pressure of the water supplied from the high pressure water supply source Sw, for example, the tap water, is not uniform and differs depending on the high pressure water supply source Sw. Accordingly, the amount of the water supplied to the water reservoir 14 may vary even though an operation time of the water supply valve 43 is identical. The time t1 is set at a time period such that the water supply valve 43 can supply a water amount allowing the water level W to normally reach the low position L2 even in a case where the gravitational pressure of the water is at a lower side.

The time t2 is set at a time period such that the water supply valve 43 can supply a water amount allowing the water level W to normally reach the high position L1 even in a case where the gravitational pressure of the water is at the lower side.

When the water level W of the water reservoir 14 reaches an output limited level C2 during the automatic water filling, the reforming water pump 11b2 can be operated to pump up the reforming water of the water reservoir 14, thereby starting a warming up operation of the fuel cell system. In this case, the time t2 is set in consideration of an amount of the reforming water used, on the basis of the operation of the reforming water pump 11b2.

When the fuel cell system in a power generation state in which the electric power is generated by the steady operation, the exhaust combustion gas discharged from the fuel cell module 11 to the exhaust pipe 11d is high in temperature and the exhaust combustion gas includes the steam included in the reformed gas generated at the reforming portion 33. The high temperature exhaust combustion gas containing the steam as described above is cooled down at the heat exchanger 12, and thus the steam is cooled to form the condensed water. Then, the condensed water is sent out to the water reservoir 14 via the condensed water supply pipe 12a.

A flow rate per unit time of water, the water which includes the water generated by the electrochemical reaction at the power generation of the fuel cell 34 added with the reforming water generated at the heat exchanger 12, is W1. A flow rate per unit time of the reforming water, the reforming water which moves from the water reservoir 14 to the evaporating portion 32 and is consumed as the steam, is W2. A relationship of W1≧W2 is established between the flow rate W1 per unit time and the flow rate W2 per unit time. Consequently, in the power generation state in which the fuel cell 34 generates the electric power by the steady operation, the supply of water from an outside, for example, from the high pressure water supply source Sw, is not needed because the amount of reforming water in the water reservoir 14 can increase. The condensed water and the water generated by the electrochemical reaction at the power generation of the fuel cell 34 can be increased in accordance with the power output of the fuel cell 34. Therefore, the amount of the reforming water of the water reservoir 14 can be increased in accordance with the power output.

In addition, in a case where the water level W of the water reservoir 14 is in the output limited range C2, an amount of reactant gas (the reformed gas, the cathode air) that meets a limited inverter output of the inverter device 13 is supplied to the fuel cell 34. Thus, the output power of the fuel cell 34 is limited or restricted to an output that is lower than the rated power, and the fuel cell system performs an output limited operation. The power generation is performed even in a state where the output power is limited due to the output limited operation of the fuel cell 34, and therefore the supply of the water from the outside, for example, from the high pressure water supply source Sw, is not needed because the amount of the reforming water in the water reservoir 14 can increase in a similar manner to the power generation state of the steady operation of the fuel cell, even though the above-described water generated by the electrochemical reaction in the power generation of the fuel cell 34 and the above-described reforming water generated at the heat exchanger 12 decrease compared to the power generation state in which the steady operation is performed. In a case where the output of the fuel cell 34 is reduced, extra reformed gas temporarily generated is purged by increasing the cathode air by the cathode air blower 11c1.

After the control apparatus 15 supplies the water of the first predetermined amount V1 to the water reservoir 14 so that the water level W of the water reservoir 14 comes to be in the normal level C1, the control apparatus 15 makes the water supply valve 43 open and close periodically to prevent the water supply valve 43 from sticking.

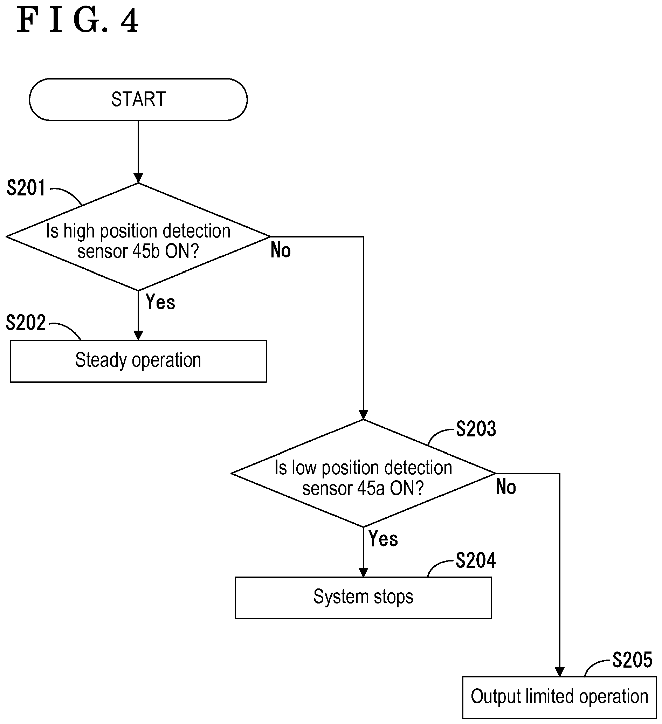

The operation of the fuel cell system is performed on the basis of the water level of the water reservoir 14. To monitor an abnormal water level of the water reservoir 14, the control apparatus 15 starts the execution of a program corresponding to the flowchart shown in Fig. 4 after the water filling of the water reservoir 14 is performed (that is, after the time period ta from the start of the second timer TM2).

At Step S201, the control apparatus 15 determines whether or not the high position detection sensor 45b is ON. In a case where the high position detection sensor 45b is ON, the control apparatus 1 determines as "Yes" at Step S201 and moves the program to Step S202. At Step S202, the control apparatus 15 instructs the fuel cell system to perform the steady operation. On the basis of the instruction, for example, in a case where the steady operation is ongoing, the fuel cell system continues the ongoing steady operation. For example, in a case where the output limited operation is ongoing, the fuel cell system performs the steady operation.

In a case where the high position detection sensor 45b is not ON, the control apparatus 15 determines as "No" at Step S201 and moves the program to Step S203. At Step S203, the control apparatus 15 determines whether or not the low position detection sensor 45a is ON. In a case where the low position detection sensor 45a is ON, the control apparatus 15 determines as "Yes" at Step S203 and moves the program to Step S204. At Step S204, the control apparatus 15 instructs the fuel cell system to stop. Then, the control apparatus 15 instructs the water filling of the water reservoir 14 to be conducted again.

In a case where the low position detection sensor 45a is not ON, the control apparatus 15 determines as "No" at Step S203 and moves the program to Step S205. At Step S205, the control apparatus 15 instructs the fuel cell system to perform the output limited operation. On the basis of the instruction, for example, in a case where the output limited operation is ongoing, the fuel cell system continues the ongoing output limited operation. For example, in a case where the steady operation is ongoing, the fuel cell system performs the output limited operation.

The above-described monitoring of the abnormality in the water level of the water reservoir 14 is repeated every time a predetermined time elapses, and the control apparatus 15 instructs the fuel cell system to operate the steady operation, to operate the output limited operation, or to stop.

In the aforementioned embodiment, the water supply pipe 42 is connected directly to the water reservoir 14. Alternatively, the water supply pipe 42 may be connected to the water reservoir 14 via the condensed water supply pipe 12a and the tap water may be supplied to the water reservoir 14 from the condensed water supply pipe 12a. In this case, in a configuration in which the tap water can be supplied to the water reservoir 14 via a water purifier built in the condensed water supply pipe 12a, the water purifier 44 may be omitted.

As described above, according to the fuel cell system related to the present embodiment, the fuel cell system includes the fuel cell 34 supplied with the reformed gas and the oxidant gas, and generating the electric power by the electrochemical reaction, the reforming portion 33 generating the reformed gas from the fuel and the reforming water, and supplying the generated reformed gas to the fuel cell 34, the water reservoir 14 accommodating the reforming water and allowing the reforming water to overflow from the overflow position Lo in a case where the reforming water exceeds a capacity of the water reservoir 14, the heat exchanger 12 (i.e., the condenser) supplying the condensed water to the water reservoir 14, the condensed water being formed by the condensation of the steam included in the reformed gas flowing through the reforming portion 33 and the fuel cell 34, the water supply pipe 42 configured to be connected to the high pressure water supply source Sw and supplying the water to the water reservoir 14, the water supply valve 43 provided at the water supply pipe 42, and opening and closing the water supply pipe 42, the reforming water pump 11b2 (i.e., the pump) including an inlet port and an outlet port, the inlet port being arranged at a bottom portion of the water reservoir 14 and the outlet port being in fluid communication with the reforming portion 33, the low position detection sensor 45a detecting the abnormal level C3, pumping up of the reforming water stored in the water reservoir 14 to the reforming portion 33 by the reforming water pump 11b2 being difficult in a case where the water level W of the reforming water stored in the water reservoir 14 is at the abnormal level C3, the high position detection sensor 45b detecting the normal level C1, the water level W of the reforming water stored in the water reservoir 14 exceeding the high position L1 between the overflow position Lo and the abnormal level C3 at the normal level C1, and the control apparatus 15 determining that the water level W is in the normal range C1 and controlling the output of the fuel cell 34 to be in the steady state, in a case where the high position detection sensor 45b detects the normal level C1, the control apparatus 15 determining that the water level W is in the output limited range C2 and reducing the output of the fuel cell 34, in a case where the low position detection sensor 45a does not detect the abnormal level C3 and the high position detection sensor 45b does not detect the normal level C1. Consequently, even in a case where the water level W of the reforming water decreases below the normal level C1, that is, in a case where the water level W is in the output limited range C2, the fuel cell system does not stop the operation and continues the power generation of the fuel cell 34 while reducing the output of the fuel cell 34. In addition, in a case where the fuel cell 34 is generating the electric power with the reduced output, in addition to the water generated due to the electrochemical reaction at the power generation of the fuel cell 34, the condensed water from the heat exchanger 12 (i.e., the condenser) can be supplied to the water reservoir 14. Consequently, there is no need to supply the reforming water to the water reservoir 14 separately, which provides an easy maintenance. That is, in a case where the fuel cell 34 is generating the electric power with the reduced output, the water reservoir 14 does not need a separate water supply other than the water generated due to the electrochemical reaction at the power generation of the fuel cell 34 and the condensed water from the heat exchanger 12. In addition, even in a case where the fuel cell 34 is generating the electric power with the reduced output, the reforming water of the water reservoir 14 can be increased by the water generated by the electrochemical reaction at the power generation of the fuel cell 34 and by the reforming water supplied from the heat exchanger 12, in a similar manner to a case where the electric power is generated in the steady operation state in which the output is not limited. Consequently, the water level of the reforming water of the water reservoir 14 can return from the output limited range C2 to the normal level C1 without the separate water supply to the water reservoir 14. As described above, the reforming water may increase in a case where the fuel cell 34 is generating the electric power with the reduced output, and consequently the time may be shortened compared to a case where the water level W is restored to the normal level by supplying the water separately.

As described above, according to the fuel cell system related to the present embodiment, the control apparatus 15 determines that the water level W of the reforming water in the water reservoir 14 is in the abnormal range C3 and stops the operation of the fuel cell system, in a case where the low position detection sensor 45a detects the abnormal level C3. Consequently, the check or inspection of the fuel cell system can be conducted.

As described above, according to the fuel cell system related to the present embodiment, the water received by the water reservoir 14 in the normal range C1 corresponds to the water of the first predetermined amount V1 which is needed to start the fuel cell 34 even in a case where the fuel cell 34 is started and stopped one time. Consequently, even though the first predetermined amount V1 is consumed because the fuel cell 34 is started and stopped one time, and then the fuel cell 34 is re-started, the water level W of the water reservoir 14 can remain at the normal level C1.

As described above, according to the fuel cell system related to the present embodiment, the water received by the water reservoir 14 in the output limited range C2 corresponds to the water of the second predetermined amount V2 which is needed to start the fuel cell 34 even in a case where the fuel cell 34 is started and stopped plural times. Consequently, the water reservoir 14 allows the fuel cell 34 to re-start up even though the plural times of the start-ups and stops of the fuel cell 34 are performed. In addition, even in a case where the second predetermined amount V2 is consumed, the water level W of the water reservoir 14 can remain in the output limited range C2. In a state where the fuel cell 34 is operated while the output of the fuel cell 34 is being limited, the reforming water of the water reservoir 14 can be increased by the water generated in the electrochemical reaction at the power generation of the fuel cell 34 in addition to by the reforming water supplied from the heat exchanger 12 (i.e., the condenser), in a similar manner to the steady operation state of the fuel cell. Therefore, the water level W of the water reservoir 14 can be restored from the output limited range C2 to the normal level C1 without the separate supply of the water to the water reservoir 14. As described above, the reforming water may increase when the fuel cell 34 is generating the electric power with the reduced output, and accordingly the time may be shortened compared to a case where the water level W is restored to the normal level by supplying the water separately.

As described above, according to the fuel cell system related to the present embodiment, from immediately after the high position detection sensor 45b detects the normal level C1, the control apparatus 15 makes the water supply valve 43 be in the open state for the predetermined time period ta, that is, the open state of the water supply valve 43 continues for the predetermined time period ta, and supplies the water of the first predetermined amount V1 to the water reservoir 14. Consequently, the water filling of the water reservoir 14 is automated easily.

As described above, according to the fuel cell system related to the present embodiment, the control apparatus 15 supplies the water from the high pressure water supply source Sw to the water reservoir 14 by opening and closing the water supply valve 43 intermittently and the control apparatus 15 supplies the water of the first predetermined amount V1 to the water reservoir 14 by opening and closing the water supply valve 43 by a predetermined number of times from immediately after the high position detection sensor 45b detects the normal level C1. Consequently, the tap water is supplied to the water reservoir 14 smoothly without exceeding the processing capacity of the ion-exchange resin built in the water purifier 44.

In addition, according to the fuel cell system related to the present embodiment, the system is stopped approximately once monthly for detection of gas leak. At this time, the water supply valve 43 is opened and closed periodically before the power generation after the system is warmed up, thereby preventing the water supply valve 43 from being stuck.

In a case where plural embodiments exist, a feature of each embodiment can be appropriately combined with each other unless otherwise specified. The scope of the invention is defined by the claims.

A fuel cell system includes a fuel cell (34), a reforming portion (33), a water reservoir (14), a condenser (12), a water supply pipe (42) supplying water to the water reservoir, a water supply valve (43) opening and closing the water supply pipe, a pump (11b2), a low position detection sensor (45a) detecting an abnormal level (C3), a high position detection sensor (45b) detecting a normal level (C1), and a control apparatus (15) controlling an output of the fuel cell to be in a steady state in a case where the high position detection sensor detects the normal level, the control apparatus reducing the output of the fuel cell in a case where the low position detection sensor does not detect the abnormal level and the high position detection sensor does not detect the normal level.

## Claims

1. A fuel cell system comprising:
a fuel cell (34) supplied with reformed gas and oxidant gas, and generating electric power by an electrochemical reaction;
a reforming portion (33) configured to generate the reformed gas from a fuel and reforming water, and to supply the generated reformed gas to the fuel cell (34);
a water reservoir (14) configured to accommodate the reforming water and to allow the reforming water to overflow from an overflow position (Lo) in a case where the reforming water exceeds a capacity of the water reservoir (14);
a condenser (12) configured to supply condensed water to the water reservoir (14), the condensed water being formed by condensation of steam included in the reformed gas flowing through the reforming portion (33) and the fuel cell (34);
a water supply pipe (42) configured to be connected to a high pressure water supply source (Sw) via a water purifier and to supply tap water to the water reservoir (14);
a water supply valve (43) provided at the water supply pipe (42), and opening and closing the water supply pipe (42);
a pump (11b2) including an inlet port and an outlet port, the inlet port being arranged at a bottom portion of the water reservoir (14) and the outlet port being in fluid communication with the reforming portion (33);
a low position detection sensor (45a) configured to detect an abnormal level (C3), pumping up of the reforming water stored in the water reservoir (14) to the reforming portion (33) by the pump (11b2) being difficult in a case where a water level (W) of the reforming water stored in the water reservoir (14) is at the abnormal level (C3), since the inlet port is arranged at the bottom portion of the water reservoir (14);
a high position detection sensor (45b) configured to detect a normal level (C1), the water level (W) of the reforming water stored in the water reservoir (14) exceeding a high position (L1) between the overflow position (Lo) and the abnormal level (C3) at the normal level (C1); and
when the fuel cell system in a power generation state in which the electric power is generated by the steady operation,
a control apparatus (15) configured to determine that the water level (W) is in a normal range (C1) and to control an output of the fuel cell (34) to be in a steady state, in a case where the high position detection sensor (45b) detects the normal level (C1),
the control apparatus (15) configured to determine that the water level (W) is in an output limited range (C2) and to reduce the output of the fuel cell (34), in a case where the low position detection sensor (45a) does not detect the abnormal level (C3) and the high position detection sensor (45b) does not detect the normal level (C1),
wherein the fuel cell system is configured, in a case where the fuel cell system is newly installed or the fuel cell system that has been used is moved and is installed at a new location, to start the operation of the fuel cell system, the tap water, of which the ionic component has been removed, is supplied from the water supply pipe (42) to the water reservoir (14),
**characterized in that**
the control apparatus (15) is configured, from immediately after the high position detection sensor (45b) has detected the normal level (C1), to make the water supply valve (43) be in an open state for a predetermined time period (ta) and to supply the water of a first predetermined amount (V1) to the water reservoir (14), and an amount of the water supplied to the water reservoir (14) in the normal range (C1) corresponds to water of the first predetermined amount (V1), the first predetermined amount (V1) corresponds to the amount of water needed to re-start the fuel cell (34) even after the fuel cell (34) is started and stopped one time.

2. The fuel cell system according to claim 1, wherein the control apparatus (15) is configured to determine that the water level (W) of the reforming water in the water reservoir (14) is in an abnormal range (C3) and to stop operation of the fuel cell system, in a case where the low position detection sensor (45a) detects the abnormal level (C3).

3. The fuel cell system according to either claim 1 or 2, wherein an amount of the water supplied to the water reservoir (14) in the output limited range (C2) corresponds to water of a second predetermined amount (V2), the second predetermined amount (V2) corresponds to the amount of water needed to re-start the fuel cell (34) even after the fuel cell (34) is started and stopped by plural times.

4. The fuel cell system according to claim 1, wherein
the control apparatus (15) is configured to supply the water from the high pressure water supply source (Sw) to the water reservoir (14) by opening and closing the water supply valve (43) intermittently, and
the control apparatus (15) is configured to supply the water of the first predetermined amount (V1) to the water reservoir (14) by opening and closing the water supply valve (43) by a predetermined number of times from immediately after the high position detection sensor (45b) detects the normal level (C1).

## Patentansprüche

1. Brennstoffzellensystem, umfassend:
eine Brennstoffzelle (34), die mit reformiertem Gas und Oxidationsgas versorgt wird und durch eine elektrochemische Reaktion elektrische Energie erzeugt;
einen Reformabschnitt (33), der gestaltet ist, um das reformierte Gas aus einem Kraftstoff und reformierendem Wasser zu erzeugen und das erzeugte reformierte Gas an die Brennstoffzelle (34) zu liefern;
einen Wasserspeicher (14), der gestaltet ist, um das Reformwasser aufzunehmen und das Reformwasser von einer Überlaufposition (Lo) überlaufen zu lassen, in einem Fall, in dem das Reformwasser eine Kapazität des Wasserspeichers (14) überschreitet;
einen Kondensor (12), der gestaltet ist, um dem Wasserspeicher (14) kondensiertes Wasser zuzuführen, wobei das kondensierte Wasser durch Kondensation von Dampf gebildet wird, der in dem reformierten Gas enthalten ist, das durch den Reformabschnitt (33) und die Brennstoffzelle (34) strömt;
eine Wasserzufuhrleitung (42), die gestaltet ist, um über einen Wasserreiniger mit einer Hochdruck-Wasserzufuhrquelle (Sw) verbunden zu werden und Leitungswasser an den Wasserspeicher (14) zu liefern;
ein Wasserzufuhrventil (43), das an der Wasserzufuhrleitung (42) vorgesehen ist und die Wasserzufuhrleitung (42) öffnet und schließt; eine Pumpe (11b2) mit einem Einlassanschluss und einem Auslassanschluss, wobei der Einlassanschluss an einem Bodenabschnitt des Wasserbehälters (14) angeordnet ist und der Auslassanschluss in Fluidverbindung mit dem Reformabschnitt (33) steht;
einen Niedrigpositionserfassungssensor (45a) zum Erfassen eines abnormalen Niveaus (C3), wobei das Hochpumpen des im Wasserspeicher (14) gespeicherten Reformwassers zum Reformierungsabschnitt (33) durch die Pumpe (11b2) schwierig ist, wenn ein Wasserstand (W) des im Wasserspeicher (14) gespeicherten Reformwassers auf dem abnormalen Niveau (C3) liegt, da die Einlassöffnung am unteren Abschnitt des Wasserspeichers (14) angeordnet ist;
einen Hochpositionserfassungssensor (45b), der gestaltet ist, um einen normalen Pegel (C1) zu erfassen, wobei der Wasserstand (W) des im Wasserspeicher (14) gespeicherten Reformierungswassers eine hohe Position (L1) zwischen der Überlaufposition (Lo) und dem anormalen Niveau (C3) bei dem normalen Niveau (C1) überschreitet; und
wenn das Brennstoffzellensystem in einem Stromerzeugungszustand ist, in dem die elektrische Energie durch den stationären Betrieb erzeugt wird,
eine Steuervorrichtung (15), die gestaltet ist, um zu bestimmen, dass sich der Wasserstand (W) auf einem normalen Niveau (C1) befindet, und um eine Abgabe der Brennstoffzelle (34) in einem stationären Zustand zu steuern, in einem Fall, in dem der Hochpositionserfassungssensor (45b) das normale Niveau (C1) erfasst,
die Steuervorrichtung (15) gestaltet ist, um zu bestimmen, dass sich der Wasserstand (W) in einem Abgabebegrenzungsbereich (C2) befindet, und um die Leistung der Brennstoffzelle (34) zu reduzieren, in einem Fall, in dem der Niedrigpositionserfassungssensor (45a) das abnormale Niveau (C3) nicht erfasst und der Hochpositionserfassungssensor (45b) das normale Niveau (C1) nicht erfasst,
wobei das Brennstoffzellensystem gestaltet ist, um in einem Fall, in dem das Brennstoffzellensystem neu installiert wird oder das verwendete Brennstoffzellensystem bewegt und an einem neuen Ort installiert wird, den Betrieb des Brennstoffzellensystems zu starten, wobei das Leitungswasser, dessen ionische Komponente entfernt wurde, aus der Wasserzufuhrleitung (42) dem Wasserspeicher (14) zugeführt wird,
**dadurch gekennzeichnet, dass**
die Steuervorrichtung (15) unmittelbar nach dem Erfassen des normalen Niveaus (C1) durch den Hochpositionserfassungssensor (45b) konfiguriert ist, um das Wasserversorgungsventil (43) für eine vorbestimmte Zeitspanne (ta) in einen offenen Zustand zu versetzen und das Wasser einer ersten vorbestimmten Menge (V1) in den Wassertank (14) zu leiten, und
das aufgenommene Wasser durch Zufuhr einer Menge des Wasserspeichers (14) im normalen Bereich (C1) dem Wasser der ersten vorbestimmten Menge (V1) entspricht, wobei die erste vorbestimmte Menge (V1) der Menge an Wasser entspricht, die zum Wiederanfahren der Brennstoffzelle (34) auch nach dem Starten und Stoppen der Brennstoffzelle (34) benötigt wird.

2. Brennstoffzellensystem nach Anspruch 1, wobei die Steuervorrichtung (15) gestaltet ist, um zu bestimmen, dass sich der Wasserstand (W) des Reformwassers im Wasserspeicher (14) in einem abnormalen Bereich (C3) befindet, und um den Betrieb des Brennstoffzellensystems in einem Fall zu stoppen, in dem der Niedrigpositionserfassungssensor (45a) das abnormale Niveau (C3) erfasst.

3. Brennstoffzellensystem nach Anspruch 1 oder 2, wobei das durch die Zufuhr einer Menge des Wasserspeichers (14) im Abgabebegrenzungsbereich (C2) aufgenommene Wasser dem Wasser einer zweiten vorbestimmten Menge (V2) entspricht, wobei die zweite vorbestimmte Menge (V2) der Menge an Wasser entspricht, die zum Wiederanfahren der Brennstoffzelle (34) auch nach dem mehrfachen Starten und Stoppen der Brennstoffzelle (34) benötigt wird.

4. Brennstoffzellensystem nach Anspruch 1, wobei
die Steuervorrichtung (15) gestaltet ist, um das Wasser von der Hochdruck-Wasserversorgungsquelle (Sw) in den Wasserspeicher (14) zu leiten, indem sie das Wasserzufuhrventil (43) intermittierend öffnet und schließt, und
die Steuervorrichtung (15) gestaltet ist, um das Wasser der ersten vorbestimmten Menge (V1) in den Wasserbehälter (14) zu leiten, indem sie das Wasserzufuhrventil (43) um eine vorbestimmte Anzahl öffnet und schließt, unmittelbar nachdem der Hochpositionserfassungssensor (45b) das normale Niveau (C1) erfasst.

## Revendications

1. Système de pile à combustible comprenant :
une pile à combustible (34) à laquelle sont fournis un gaz reformé et un gaz oxydant, et générant de l'énergie électrique par une réaction électrochimique ;
une partie de reformage (33) configurée pour générer le gaz reformé à partir d'un combustible et d'eau de reformage, et pour fournir le gaz reformé généré à la pile à combustible (34) ;
un réservoir d'eau (14) configuré pour accueillir l'eau de reformage et pour permettre à l'eau de reformage de se déverser depuis une position de déversement (Lo) dans un cas où l'eau de reformage dépasse une capacité du réservoir d'eau (14) ;
un condenseur (12) configuré pour fournir l'eau condensée au réservoir d'eau (14), l'eau condensée étant formée par la condensation de vapeur incluse dans le gaz reformé s'écoulant à travers la partie de reformage (33) et la pile à combustible (34) ;
un tuyau de fourniture d'eau (42) configuré pour être raccordé à une source de fourniture d'eau haute pression (Sw) via un purificateur d'eau et pour fournir de l'eau courante au réservoir d'eau (14) ;
une vanne de fourniture d'eau (43) disposée au niveau du tuyau de fourniture d'eau (42), et ouvrant et fermant le tuyau de fourniture d'eau (42) ;
une pompe (llb2) incluant un orifice d'entrée et un orifice de sortie, l'orifice d'entrée étant agencé au niveau d'une partie inférieure du réservoir d'eau (14) et l'orifice de sortie étant en communication fluidique avec la partie de reformage (33) ;
un capteur de détection de position basse (45a) configuré pour détecter un niveau anormal (C3), le pompage de l'eau reformé stockée dans le réservoir d'eau (14) vers la partie de reformage (33) par la pompe (11b2) étant difficile dans un cas où un niveau d'eau (W) de l'eau de reformage stockée dans le réservoir d'eau (14) est au niveau anormal (C3), étant donné que l'orifice d'entrée est agencé au niveau de la partie inférieure du réservoir d'eau (14) ;
un capteur de détection de position élevée (45b) configuré pour détecter un niveau normal (C1), le niveau d'eau (W) de l'eau de reformage stockée dans le réservoir d'eau (14) dépassant une position élevée (L1) entre la position de déversement (Lo) et le niveau anormal (C3) au niveau normal (C1) ; et
quand le système de pile à combustible est dans un état de génération d'énergie dans lequel l'énergie électrique est générée par le fonctionnement constant,
un appareil de commande (15) configuré pour déterminer que le niveau d'eau (W) est dans une plage normale (C1) et pour commander une sortie de la pile à combustible (34) pour qu'elle soit dans un état constant, dans un cas où le capteur de détection de position élevée (45b) détecte le niveau normal (C1),
l'appareil de commande (15) étant configuré pour déterminer que le niveau d'eau (W) est dans une plage limitée de sortie (C2) et pour réduire la sortie de la pile à combustible (34), dans un cas où le capteur de détection de position basse (45a) ne détecte pas le niveau anormal (C3) et le capteur de détection de position élevée (45b) ne détecte pas le niveau normal (C1),
dans lequel le système de pile à combustible est configuré, dans un cas où le système de pile à combustible est récemment installé ou le système de pile à combustible qui a été utilisé est déplacé et est installé à un nouvel emplacement, pour démarrer le fonctionnement du système de pile à combustible, l'eau courante, dont le composant ionique a été retiré, est fournie depuis le tuyau de fourniture d'eau (42) vers le réservoir d'eau (14),
**caractérisé en ce que**
l'appareil de commande (15) est configuré, depuis immédiatement après que le capteur de détection de position élevée (45b) a détecté le niveau normal (C1), pour amener la vanne de fourniture d'eau (43) à être dans un état ouvert pendant une période de temps prédéterminée (ta) et pour fournir l'eau d'une première quantité prédéterminée (V1) au réservoir d'eau (14), et
une quantité de l'eau fournie au réservoir d'eau (14) dans la plage normale (C1) correspond à l'eau de la première quantité prédéterminée (V1), la première quantité prédéterminée (V1) correspond à la quantité d'eau nécessaire pour redémarrer la pile à combustible (34) même après que la pile à combustible (34) a démarré et s'est arrêtée une fois.

2. Système de pile à combustible selon la revendication 1, dans lequel l'appareil de commande (15) est configuré pour déterminer que le niveau d'eau (W) de l'eau de reformage dans le réservoir d'eau (14) est dans une plage anormale (C3) et pour arrêter le fonctionnement du système de pile à combustible, dans un cas où le capteur de détection de position basse (45a) détecte le niveau anormal (C3).

3. Système de pile à combustible selon la revendication 1 ou 2, dans lequel une quantité de l'eau fournie au réservoir d'eau (14) dans la plage limitée de sortie (C2) correspond à l'eau d'une seconde quantité prédéterminée (V2), la seconde quantité prédéterminée (V2) correspond à la quantité d'eau nécessaire pour redémarrer la pile à combustible (34) même après que la pile à combustible (34) a démarré et s'est arrêtée plusieurs fois.

4. Système de pile à combustible selon la revendication 1, dans lequel l'appareil de commande (15) est configuré pour fournir l'eau depuis la source de fourniture d'eau haute pression (Sw) vers le réservoir d'eau (14) en ouvrant et fermant la vanne de fourniture d'eau (43) par intermittence, et
l'appareil de commande (15) est configuré pour fournir l'eau de la première quantité prédéterminée (V1) au réservoir d'eau (14) en ouvrant et fermant la vanne de fourniture d'eau (43) selon un nombre de fois prédéterminé depuis immédiatement après que le capteur de détection de position basse (45a) détecte le niveau normal (C1).
